# EUROPÄISCHE PATENTSCHRIFT

(11) **EP 0 622 434 B1**
(45) Veröffentlichungstag und Bekanntmachung des Hinweises auf die Patenterteilung: **12.07.1995**
(21) Anmeldenummer: 94103202.1
(22) Anmeldetag: 03.03.1994
(51) Int. Cl.: C09J 133/08, C08J 5/12, C08F 220/10, B32B 27/30

(54) **Verwendung von wässrigen Polymerdispersionen als Glanzfolienkaschierklebstoffe**
Use of aqueous polymer dispositions as lamination adhesive
Utilisation de dispersions polymériques aqueuses comme adhésif pour stratifiés

(30) Priorität: 04.03.1993 DE 4306822
(43) Veröffentlichungstag der Anmeldung: 02.11.1994
(73) Patentinhaber: Wacker-Chemie GmbH, 81737 München (DE)
(72) Erfinder: Kohlhammer, Klaus, Dr., D-84533 Marktl (DE); Huster, Wilfried, Dr., D-84547 Emmerting (DE); Dobler, Walter, D-84367 Tann (DE)

(56) Entgegenhaltungen:
- PATENT ABSTRACTS OF JAPAN vol. 18, no. 19 (C-1152)(6359) & JP-A-05 255 411 (SHOWA HIGH POLYMER KK, FUMITOSHI TSUKIYAMA)

## Beschreibung

Die Erfindung betrifft die Verwendung von wäßrigen Polymerdispersionen auf der Basis von Acrylsäureester/Methacrylsäureester-Copolymerisaten als Glanzfolienkaschierklebstoffe.

Das Kaschieren von bedruckten Papieren oder bedrucktem Karton mit Filmen oder Folien aus Kunststoff zum Zwecke der Druckveredelung ist ein seit langem praktiziertes Verfahren. Druckerzeugnisse werden auf diesem Wege vor mechanischen Einflüssen geschützt, äußerlich attraktiver gestaltet, und sie lassen sich durch den damit erreichten Oberflächenglanz optisch gefälliger präsentieren. Praktische Beispiele dafür sind Schallplattenhüllen, Büchereinbände, Paperbacks, Verpackungsmaterialien für Kosmetikartikel und Werbematerialien.

Der Vorgang des Überziehens und Verklebens von bedruckten Papiererzeugnissen mit Kunststoff-Folien wird als "Glanzfolienkaschierung" bezeichnet. Der eingesetzte Klebstoff wird demnach "Glanzfolienkaschierkleber" genannt und hat die Aufgabe die Kunststoff-Folie einerseits und das bedruckte Papier andererseits miteinander zu verbinden. Am Anfang dieser technologischen Entwicklung wurden ausschließlich lösemittelhaltige Polymerharze verwendet, die entweder einkomponentig auf Polyacrylatbasis oder zweikomponentig in Form von reaktiven Polyurethanen zum Einsatz kamen. Verschärfte Umweltschutzauflagen zwangen zunehmend zum Verzicht auf diese lösemittelhaltigen Systeme und favorisierten den Einsatz wäßriger Polymerdispersionen. Bei den verwendeten Kaschierfolien entwickelte sich der Trend zunehmend zugunsten von Polyolefinfolien, beispielsweise Polyethylenfolien (PE-Folien) oder orientierten Polypropylen-Folien (OPP-Folien). Diese werden zum Zweck der Haftungsverbesserung an ihrer Oberfläche entweder flamm- oder coronavorbehandelt.

Erste Lösungsvorschläge zur Bindung von flamm- oder coronavorbehandelten OPP-Folien mittels wäßrigen Polymerdispersionen mit bedrucktem Papier oder bedruckten Kartonagen sind in der JP-A 77/42532 (Derwent-Abstract) und in der EP-A 46823 (US-A 4377433) beschrieben. Beide Publikationen beschreiben im wesentlichen die Verwendung wäßriger Vinylacetat/Ethylen-Copolymerdispersionen, in die Epoxid- und Amin-Funktionen als reaktive Komponenten eingearbeitet wurden. Bei der Anwendung wird eine epoxidhaltige mit einer aminhaltigen Vinylacetat/Ethylen-Dispersion gemischt. Diese Systeme haben eine relativ kurze Topfzeit und müssen sofort nach dem Vermischen zur Anwendung gebracht werden (2-Komponenten-Klebstoff).

Auch alle weiteren Vorschläge zur Verbesserung der Verbundfestigkeiten zwischen Polyolefin-Folien und bedrucktem Papier oder Karton sind durch die Verwendung von reaktiven Vernetzersystemen gekennzeichnet:
In der JP-A 60/112874 werden Ethylen/Vinylacetat/Acrylat-Dispersionen mit Hilfe von wasserlöslichen Polyaminverbindungen auf gute Haftungseigenschaften eingestellt. In der DE-A 3642485 (US-A 4980404) werden Acrylatdispersionen mit Polyaminoverbindungen zur Verklebung von Kunststoff-Folien mit Papier oder Karton empfohlen. In der DE-4117487 kommen carbonylgruppenhaltige Polymerdispersionen zum Einsatz, die mit Hilfe von multifunktionellen Aminooxyverbindungen vernetzt werden und somit eine deutliche Haftungsverbesserung auf den coronabehandelten Polyolefinoberflächen erzielen. Weitere Reaktivsysteme, die vorgeschlagen wurden, sind itaconsäurehaltige Latices (EP-A 307050). Weiter wurden wasserlösliche Polymere zur Haftungsverbesserung bei der Glanzfolienkaschierung in der DD-A 254949 und der US-A 3974112 vorgeschlagen.

Die WO-A 92/12213 beschreibt die Verwendung von wäßrigen Dispersionen von Copolymerisaten aus (Meth)acrylsäureestern, α,β-ungesättigten Carbonsäuren und (Meth)acrylsäureestern von Alkylsulfonsäuren als Klebstoffe zur Laminierung von Substraten, wobei die zu verklebenden Substrate vorzugsweise aus der Gruppe Polymerfilme, bedrucktes Papier, Metallbeschichtetes Papier und Metallfolien auszuwählen sind. Mit den dort beschriebenen Systemen sollten lösemittelhaltige Klebemittel bzw. Schmelzkleber bei der Herstellung von Laminaten ersetzt werden. Auf die spezielle Problematik der Glanzfolienkaschierung (Glanz und Transparenz der Verbunde) wird nicht eingegangen.

Der Erfindung lag die Aufgabe zugrunde, eine wäßrige Polymerdispersion zu entwickeln, die auch ohne die obengenannten reaktiven Vernetzersysteme eine gute Verbundfestigkeit zwischen gegebenenfalls corona- oder flammvorbehandelter Polyolefinfolie einerseits und bedrucktem Papier oder bedruckten Kartonagen andererseits garantiert, unter Erhalt von Verbunden mit hervorragendem Glanz und Transparenz.

Gegenstand der Erfindung ist die Verwendung von wäßrigen Polymerdispersionen auf der Basis von Acrylsäureester-Methacrylsäureester-Copolymerisaten als Glanzfolienkaschierklebstoffe, wobei die wäßrigen Polymerdispersionen einen Festgehalt von 20 bis 65 Gew% haben, das Copolymerisat eine Glastemperatur von -35 bis -10°C, einen K-Wert von 40 bis 100 und eine mittlere Teilchengröße von kleiner 200 nm hat und das Copolymerisat erhältlich ist durch radikalische Emulsionspolymerisation von
a) 50 bis 80 Gewichtsteilen eines oder mehrerer Comonomere aus der Gruppe der Acrylsäurealkylester von Alkoholen mit 2 bis 10 C-Atomen,
b) 10 bis 25 Gewichtsteilen eines oder mehrerer Comonomere aus der Gruppe der Methacrylsäurealkylester von Alkoholen mit 1 bis 10 C-Atomen sowie
c1) 0 bis 10 Gewichtsteilen eines oder mehrerer vinylaromatischer Comonomere,
c2) 0.1 bis 4.0 Gewichtsteilen einer oder mehrerer α,β-ungesättigter, monoolefinischer Carbonsäuren,
c3) 0 bis 4.0 Gewichtsteilen einer oder mehrerer α,β-ungesättigter, monoolefinischer Carbonsäureamide,
c4) 0 bis 8 Gewichtsteilen eines oder mehrerer Comonomere aus der Gruppe der Hydroxyalkyl(meth)acrylate aus Estern der Acrylsäure oder Methacrylsäure und Diolen mit 2 bis 10 C-Atomen,
c5) 0.1 bis 4.0 Gewichtsteilen einer oder mehrerer α,β-ungesättigten, monoolefinischen Verbindungen, die Sulfonsäure- oder Sulfonat-Gruppen enthalten.

Beispiele für geeignete Acrylsäurealkylester sind Ethylacrylat, Propylacrylat, n-Butylacrylat, 2-Ethylhexylacrylat. Vorzugsweise enthalten die Copolymerisate Ethylhexylacrylat und/oder n-Butylacrylat.

Beispiele für geeignete Methacrylsäurealkylester sind Methylmethacrylat, Ethylmethacrylat, Propylmethacrylat, n-Butylmethacrylat. Vorzugsweise enthalten die Copolymerisate Methylmethacrylat, besonders bevorzugt in einer Menge von 15 bis 20 Gewichtsteilen.

Als Vinylaromat c1) eignet sich beispielsweise Styrol. Beispiele für α,β-ungesättigte, monoolefinische Carbonsäuren c2) sind Acrylsäure, Methacrylsäure, Crotonsäure, Itaconsäure, Maleinsäure, Fumarsäure. Beispiele für α,β-ungesättigte, monoolefinische Carbonsäureamide c3) sind Acrylamid, Methacrylamid. Geeignete Hydroxyalkyl(meth)acrylate c4) aus Estern der Acrylsäure oder Methacrylsäure und Diolen mit 2 bis 10 C-Atomen sind beispielsweise Hydroxyethylacrylat, Hydroxypropylmethacrylat. Geeignete α,β-ungesättigte, monoolefinische Verbindungen c5), die Sulfonsäure- oder Sulfonat-Gruppen enthalten, sind beispielsweise Natriumstyrolsulfonat, Styrolsulfonsäure, Acrylamidopropansulfonsäure, Vinylsulfonat, Disulfoalkylester der Itacon-, Malein- oder Fumarsäure.

In einer bevorzugten Ausführungsform enthält die Comonomerphase
a) 50 bis 80 Gewichtsteile eines oder mehrerer Comonomere aus der Gruppe Ethylhexylacrylat und n-Butylacrylat,
b) 10 bis 25 Gewichtsteile Methylmethacrylat,
c1) 0.5 bis 10 Gewichtsteile Styrol,
c2) 0.1 bis 4.0 Gewichtsteile eines oder mehrerer Comonomere aus der Gruppe Acrylsäure, Methacrylsäure, Crotonsäure,
c3) 0.1 bis 4.0 Gewichtsteile eines oder mehrerer Comonomere aus der Gruppe Acrylamid und Methacrylamid,
c4) 0.5 bis 8 Gewichtsteile eines oder mehrerer Comonomere aus der Gruppe Hydroxyethylacrylat, Hydroxypropylmethacrylat,
c5) 0.1 bis 4.0 Gewichtsteile eines oder mehrerer Comonomere aus der Gruppe Acrylamidopropansulfonsäure, Vinylsulfonat, Styrolsulfonsäure und die entsprechenden Salze.

Insbesonders beträgt der Festgehalt der wäßrigen Polymerdispersionen, herstellbar durch Emulsionspolymerisation der obengenannten Comonomerzusammensetzungen, 30 bis 55 Gew%, wobei das Polymerisat eine Glastemperatur von -25 bis -15°C, einen K-Wert von 70 bis 100 hat und eine mittlere Teilchengröße von 150 nm sowie eine Brookfieldviskosität (20 upm) von 1000 mPas, vorzugsweise 500 mPas, nicht überschritten werden.

Die Herstellung der wäßrigen Polymerdispersionen erfolgt nach dem Verfahren der Emulsionspolymerisation. Dabei kann im Batch- oder Zulaufverfahren oder unter partieller Vorlage einzelner Komponenten, wobei der Rest im Laufe der Polymerisation zudosiert wird, gearbeitet werden. Die Polymerisationstemperatur liegt zwischen 0 und 100°C.

Zur Initiierung der Polymerisation können die in der Emulsionspolymerisation üblichen thermischen oder Redox-Initiatorsysteme zum Einsatz kommen. Im allgemeinen erfolgt die Initiierung mittels wasserlöslicher Radikalbildner, die vorzugsweise in Mengen von 0.4 bis 3.0 Gew%, bezogen auf das Gesamtgewicht der Monomeren, eingesetzt werden. Beispiele hierfür sind Ammonium- und Kaliumpersulfat, -peroxodisulfat; Wasserstoffperoxid; Azoverbindungen, wie Azobisisobutyronitril oder Azobiscyanovaleriansäure. Bei der thermischen Initiierung erfolgt die Polymerisation vorzugsweise zwischen 60 und 100°C. Die Radikalbildung kann bei niedrigeren Temperaturen, vorzugsweise unterhalb 60°C, mit Hilfe von reduzierenden Agenzien wie Alkaliformaldehydsulfoxylaten, Alkalisulfiten, -bisulfiten und -thiosulfaten und Ascorbinsäure beschleunigt werden.

Als Dispergiermittel können alle üblicherweise bei der Emulsionspolymerisation verwendeten anionischen und nichtionischen Emulgatoren eingesetzt werden. Vorzugsweise werden 1 bis 6 Gew%, bezogen auf das Gesamtgewicht der Monomeren, an Emulgator eingesetzt. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Der für die Polymerisation gewünschte pH-Bereich, der im allgemeinen zwischen 2.5 und 10, vorzugsweise 3 und 8, liegt, kann in bekannter Weise durch Säuren, Basen oder übliche Puffersalze, wie Alkaliphosphate oder Alkalicarbonate, eingestellt werden. Zur Molekulargewichtseinstellung (K-Wert-Einstellung) können bei der Polymerisation die üblicherweise verwendeten Regler, zum Beispiel Mercaptane, Aldehyde und Chlorkohlenwasserstoffe, zugesetzt werden.

Bevorzugt wird eine Verfahrensweise, bei der man die Comonomermischung und den Emulgator partiell vorlegt, den Ansatz auf Polymerisationstemperatur erhitzt und anschließend mit einer kleinen Initiatorstoßdosierung anpolymerisiert. Die Zugabe der restlichen Comonomere und des restlichen Initiators erfolgt im Zulaufverfahren aus einer vorbereiteten Voremulsion.

Besonders bevorzugt wird eine Verfahrensweise, bei der von 2 bis 10 Gew% der Acrylsäureester, der Methacrylsäureester und des Emulgators vorgelegt werden, der Reaktionsansatz auf eine Temperatur von 60 bis 100°C erhitzt wird, die Polymerisation durch Zugabe von 1.0 bis 2.5 Gew% des Initiators gestartet wird und der Rest der Comonomermischung, des Emulgators und Initiators entsprechend dem Verbrauch als Voremulsion zudosiert wird.

Bei der erfindungsgemäßen Verwendung der wäßrigen Polymerdispersionen als Bindemittel in der Glanzfolienkaschierung werden im allgemeinen bedruckte Kartonagen und Papiere mit Kunststoff-Folien, vorzugsweise Polyolefinfolien, die flamm- und/oder coronavorbehandelt sein können, Polyesterfolien und Celluloseacetatfolien großflächig verklebt. Hierzu wird die wäßrige Polymerdispersion in dem Fachmann bekannter Weise im allgemeinen auf die vorbehandelte Folienseite der Kunststoff-Folie mit einer Auftragsstärke von vorzugsweise 5 bis 50 »m aufgetragen und anschließend getrocknet. Zur Verbundherstellung wird der getrocknete Polymerfilm mit dem zu kaschierenden Papier- bzw. Kartonagebogen abgedeckt und bei geeigneter Temperatur und unter Druck, vorzugsweise bei einer Temperatur von 50 bis 100°C und unter einem Druck von 2 bis 6 bar, gesiegelt.

Bei der erfindungsgemäßen Verwendung der wäßrigen Polymerdispersionen mit den obengenannten Copolymerzusammensetzungen bildet sich nach dem Trocknungsschritt schon bei sehr geringen Auftragsmengen ein Klebstoff-Film, der zu qualitativ hochwertigen, stabilen Verklebungen bei sehr geringer Schichtdicke der Klebstoffschicht führt. Bei der Anwendung in der Glanzfolienkaschierung, bei der es besonders auf die optischen Eigenschaften des Verbunds ankommt, erhält man Produkte, die sich durch herausragende Transparenz und Glanz auszeichnen.

Im Unterschied zu 2-Komponenten-Klebemitteln zur Glanzfolienkaschierung, die reaktive wasserlösliche oder wasseremulgierbare Vernetzersysteme enthalten, zeichnen sich die wäßrigen Polymerdispersionen durch eine nahezu unbegrenzte Lagerfähigkeit und Topfzeit aus. Der Verzicht auf reaktive Vernetzersysteme bedingt auch überlegene rheologische Eigenschaften der wäßrigen Polymerdispersionen, die sowohl die manuelle Verarbeitung als auch die Verarbeitung auf schnell-laufenden Maschinen ermöglichen.

Die nachfolgenden Beispiele dienen zur weiteren Erläuterung der Erfindung.

### Herstellung der Polymerdispersionen:

### Beispiel 1:

Es wurden drei Dosierlösungen vorbereitet:
Initiatorlösung I: 0.06 g Kaliumpersulfat wurden in 8.5 ml Wasser gelöst.
Initiatorlösung II:
5.1 g Kaliumpersulfat wurden in 100 ml Wasser und 0.5 g NH₃ (12 %ig) gelöst.
Voremulsion:
69.3 GewTeile (577 g) n-Butylacrylat, 19.0 GewTeile (158 g) Methylmethacrylat, 1.75 GewTeile (14.6 g) Styrol, 4.7 GewTeile (39.8 g) Hydroxypropylmethacrylat, 0.65 GewTeile (5.4 g) Acrylsäure, 0.65 GewTeile (18.1 g einer 30 %igen Lösung) Acrylamid, 0.27 GewTeile (2.23 g) Na-Styrolsulfonat und 27.1 g einer 35 %igen Lösung eines Nonylphenol-25-Ethylenoxidsulfats (Rewopol NOS25) wurden in 274 ml Wasser emulgiert.
In einem Rührkessel mit Rückflußkühler und Innenthermometer wurden mit 441 ml Wasser 3.7 GewTeile (29.8 g) n-Butylacrylat, 1.0 GewTeile (8.2 g) Methylmethacrylat, 0.43 GewTeile (3.6 g) Styrol, 0.2 GewTeile (2.0 g) Hydroxypropylmethacrylat, 0.09 GewTeile (2.4 g in 30 %iger Lösung) Acrylamid, 0.02 GewTeile (0.18 g) Na-Styrolsulfonat und 17.8 g einer 35 %igen Lösung eines Nonylphenol-25-Ethylenoxidsulfats (Rewopol NOS25) vorgelegt und auf 80°C erwärmt. Nach Erreichen des Temperaturgleichgewichts wurden beide Initiatorlösungen zeitgleich gestartet, wobei die Dosierraten entsprechend einer Dosierzeit von 10 Minuten für Initiatorlösung I und von ca. 3.5 Stunden für Initiatorlösung II gewählt werden. Sofort nach dem merklichen Beginn einer exothermen Reaktion wurde die Voremulsion mit konstanter Dosierrate eingefahren; die Dosierzeit betrug 3 Stunden. Die Polymerisation wurde nach Dosierende durch 30-minütiges Rühren bei 80°C vervollständigt.
Es resultierte eine stippenfreie Dispersion mit einem Festgehalt von 50.3 Gew% und einer durchschnittlichen Teilchengröße von 90 nm. Der K-Wert (gemessen in THF) des Polymerisats lag bei 93.1, die Glastemperatur betrug T_{g} = - 16.2°C. Durch Verdünnung wurde ein Festgehalt von 47 Gew% eingestellt.

### Beispiel 2:

Es wurde analog Beispiel 1 vorgegangen, wobei die in Tabelle 1 angegebenen Mengen an Comonomer, Emulgator und Initiator eingesetzt wurden. Festgehalt, K-Wert, Teilchengröße und Glastemperatur sind ebenfalls Tabelle 1 zu entnehmen.

### Vergleichsbeispiel 1:

Es wurde analog Beispiel 1 vorgegangen, wobei die in Tabelle 1 angegebenen Mengen an Comonomer, Emulgator und Initiator eingesetzt wurden. Im Unterschied zu Beispiel 1 wurde die nur etwa 0.4-fache Menge an Initiator eingesetzt, so daß ein Polymerisat mit K-Wert > 100 resultierte.

### Vergleichsbeispiel 2:

Es wurde analog Vergleichsbeispiel 1 vorgegangen, wobei die in Tabelle 1 angegebenen Mengen an Comonomer, Emulgator und Initiator eingesetzt wurden.

**Tabelle 1**

| Rezeptur [GewTeile] | Beispiel 1 | Beispiel 2 | Vergl.bsp.1 | Vergl.bsp.2 |
|---|---|---|---|---|
| BuA | 73.0 | 77.0 | 73.0 | 77.0 |
| MMA | 20.0 | 16.0 | 20.0 | 16.0 |
| STY | 2.18 | 2.18 | 2.18 | 2.18 |
| HPMA | 4.90 | 4.90 | 4.90 | 4.90 |
| AA | 0.74 | 0.74 | 0.74 | 0.74 |
| AS | 0.65 | 0.65 | 0.65 | 0.65 |
| NaSS | 0.29 | 0.29 | 0.29 | 0.29 |
| Festgehalt [Gew%] | 47.0 | 47.0 | 49.7 | 49.6 |
| K-Wert | 93.1 | 93.1 | 101 | 103 |
| Teilchengröße [nm] | 90 | 102 | 106 | 113 |
| Glastemperatur [°C] | -16.2 | -21.4 | -16.8 | -21.4 |
| Viskosität [mPas] | < 500 | < 500 | 220 | 480 |
| BuA: n-Butylacrylat, MMA: Methylmethacrylat, STY: Styrol, HPMA: Hydroxypropylmethacrylat, AA: Acrylamid, AS: Acrylsäure, NaSS: Na-Styrolsulfonat. | | | | |

### Anwendungstechnische Prüfung:

Folgende Substrate wurden zur Herstellung der Verbunde verwendet:
- F1 :: PE-Folie (Polyethylen), 50 »m dick, Oberflächenspannung_{unbehand.} = 28 - 30 mN/m, eigene Coronabehandlung mit Softal Electronic Typ HR-1R AB300 Corona
- F2 :: OPP-Folie (orientiertes Polypropylen), 12 »m dick, beidseitig vorbehandelt, Hersteller: LONZA, Type Ultralen K
- F3 :: OPP-Folie, 30 »m dick, einseitig vorbehandelt, Hersteller: AKZO, Type Biafol
- P1 :: hochwertige Papiergualität und Kartone, bedruckt mit Reflex Blau Nr. 62105 Epple Druckfarben
- P2 :: Mehrfarbdruck-Kartonage
Die Klebstoffbeschichtung wurde auf die vorbehandelte Folienseite mit einer Auftragsstärke von 12 »m (naß) entsprechend 5.7 g/m² (trocken) vorgenommen, 3 Minuten bei 80°C getrocknet und anschließend mit dem Druckbogen abgedeckt. Zur Verbundherstellung wurden die Prüfkörper 3 Sekunden bei 80°C und 3 bar gesiegelt. Nach entsprechender Lagerung der Verbunde wurde die Verbundfestigkeit (Schälfestigkeit/180°) der Verbunde mittels einer Materialprüfmaschine 1445 (Fa. Zwick) bei einer Abzugsgeschwindigkeit von 300 mm/min ermittelt.

Die Beurteilung der Verbunde erfolgt anhand der Ergebnisse, die die Materialprüfmaschine liefert: Bei schlechten Verbunden läßt sich die aufkaschierte Folie mit einer meßbaren Kraft abschälen (Schälfestigkeit) - die entsprechenden Zahlenwerte sind in Tabelle 2 abgegeben. Gute Verbunde zeichnen sich dadurch aus, daß sich die aufkaschierte Folie nicht abziehen läßt. In diesen Fällen findet man während des Schältests in der Prüfmaschine entweder Druckfarbenübertrag vom Papier auf die Folie, Druckfarbenausriß aus dem Papier oder Papierausriß; außerdem kann es zum Abreißen der aufkaschierten Folie kommen (Folienriß). Die Ergebnisse der anwendungstechnischen Prüfung sind für die einzelnen Verbunde in Tabelle 2 angegeben.

**Tabelle 2**

| Verbund/Lagerzeit | Beispiel 1 | Beispiel 2 | Vergl.bsp.1 | Vergl.bsp.2 |
|---|---|---|---|---|
| F1-P2/5 min | DÜ/PA | DÜ/PA | 1.32/KÜ | 1.39/KÜ |
| F2-P2/5 min | FR | FR | - | - |
| F3-P2/5 min | DÜ/PA | DÜ/PA | - | - |
| F1-P2 / 4 h | DÜ/PA | DÜ/PA | 1.50/KÜ | 1.42/KÜ |
| F2-P2 / 4 h | FR | FR | - | - |
| F3-P2 / 4 h | DÜ/PA | DÜ/PA | - | - |
| F1-P2 / 2 d | DÜ/PA | DÜ | 1.30/KÜ | 1.33/KÜ |
| F2-P2 / 2 d | FR | FR | - | - |
| F3-P2 / 2 d | DÜ/PA | DÜ | - | - |
| DÜ: Druckfarbenübertrag; FR: Folienriß; PA: Papierausriß; KÜ: Klebstoffübertrag von Folie auf Druckbogen | | | | |

Die erfindungsgemäßen Glanzfolienkaschierkleber-Dispersionen gemäß Beispiel 1 und Beispiel 2 sind sofort nach der Verbundherstellung schälfest: In der Zugprüfmaschine wurde entweder Druckfarbenübertrag vom Druckbogen auf die mit dem Klebstoff beschichteten Folien beobachtet oder es fand ein Papierausriß oder Folienriß statt. Die Verbunde mit Klebemitteln gemäß der Vergleichsbeispiele 1 oder 2 hingegen ließen sich leicht schälen, wobei zusätzlich ein Klebstoffübertrag von der Folienoberfläche auf den Druckbogen stattfand.

## Patentansprüche

1. Verwendung von wäßrigen Polymerdispersionen auf der Basis von Acrylsäureester-Methacrylsäureester-Copolymerisaten als Glanzfolienkaschierklebstoffe, wobei die wäßrigen Polymerdispersionen einen Festgehalt von 20 bis 65 Gew% haben, das Copolymerisat eine Glastemperatur von -35 bis -10°C, einen K-Wert von 40 bis 100 und eine mittlere Teilchengröße von kleiner 200 nm hat und das Copolymerisat erhältlich ist durch radikalische Emulsionspolymerisation von
a) 50 bis 80 Gewichtsteilen eines oder mehrerer Comonomere aus der Gruppe der Acrylsäurealkylester von Alkoholen mit 2 bis 10 C-Atomen,
b) 10 bis 25 Gewichtsteilen eines oder mehrerer Comonomere aus der Gruppe der Methacrylsäurealkylester von Alkoholen mit 1 bis 10 C-Atomen sowie
c1) 0 bis 10 Gewichtsteilen eines oder mehrerer vinylaromatischer Comonomere,
c2) 0.1 bis 4.0 Gewichtsteilen einer oder mehrerer α,β-ungesättigter, monoolefinischer Carbonsäuren,
c3) 0 bis 4.0 Gewichtsteilen einer oder mehrerer α,β-ungesättigter, monoolefinischer Carbonsäureamide,
c4) 0 bis 8 Gewichtsteilen eines oder mehrerer Comonomere aus der Gruppe der Hydroxyalkyl(meth)acrylate aus Estern der Acrylsäure oder Methacrylsäure und Diolen mit 2 bis 10 C-Atomen,
c5) 0.1 bis 4.0 Gewichtsteilen einer oder mehrerer α,β-ungesättigter, monoolefinischer Verbindungen, die Sulfonsäure- oder Sulfonat-Gruppen enthalten.

2. Verwendung nach Anspruch 1, dadurch gekennzeichnet, daß die Comonomerphase
a) 50 bis 80 Gewichtsteile eines oder mehrerer Comonomere aus der Gruppe Ethylhexylacrylat und n-Butylacrylat,
b) 10 bis 25 Gewichtsteile Methylmethacrylat,
c1) 0.5 bis 10 Gewichtsteile Styrol,
c2) 0.1 bis 4.0 Gewichtsteile eines oder mehrerer Comonomere aus der Gruppe Acrylsäure, Methacrylsäure, Crotonsäure,
c3) 0.1 bis 4.0 Gewichtsteile eines oder mehrerer Comonomere aus der Gruppe Acrylamid und Methacrylamid,
c4) 0.5 bis 8 Gewichtsteile eines oder mehrerer Comonomere aus der Gruppe Hydroxyethylacrylat, Hydroxypropylmethacrylat,
c5) 0.1 bis 4.0 Gewichtsteile eines oder mehrerer Comonomere aus der Gruppe Acrylamidopropansulfonsäure, Vinylsulfonsäure, Styrolsulfonsäure und deren Salze enthält.

3. Verwendung nach Anspruch 1 bis 2, dadurch gekennzeichnet, daß der Festgehalt der wäßrigen Polymerdispersionen 30 bis 55 Gew% beträgt, wobei das Polymerisat eine Glastemperatur von -25 bis -15°C, einen K-Wert von 70 bis 100 hat und eine mittlere Teilchengröße von 150 nm sowie eine Brookfieldviskosität (20 upm) von 1000 mPas nicht überschritten werden.

4. Verwendung nach Anspruch 1 bis 3, dadurch gekennzeichnet, daß die wäßrigen Polymerdispersionen in der Glanzfolienkaschierung auf Kunststoff-Folien großflächig mit einer Auftragsstärke von vorzugsweise 5 bis 50 »m aufgetragen, anschließend getrocknet werden und zur Verbundherstellung der getrocknete Polymerfilm mit dem zu kaschierenden Papier- oder Kartonagebogen abgedeckt wird und bei geeigneter Temperatur und unter Druck gesiegelt wird.

## Claims

1. The use of an aqueous polymer dispersion based on acrylate-methacrylate copolymers as lamination adhesives for glossy films, where the aqueous polymer dispersions have a solids content of from 20 to 65 % by weight, the copolymer has a glass transition temperature of from -35 to -10°C, a K value of from 40 to 100 and a mean particle size of less than 200 nm, and the copolymer is obtainable by free-radical emulsion polymerization of
a) from 50 to 80 parts by weight of one or more comonomere from the group consisting of alkyl acrylates of alcohols having 2 to 10 carbon atoms,
b) from 10 to 25 parts by weight of one or more comonomere from the group consisting of alkyl methacrylates of alcohols having 1 to 10 carbon atoms, and
c1) from 0 to 10 parts by weight of one or more vinyl-aromatic comonomers,
c2) from 0.1 to 4.0 parts by weight of one or more α,β-unsaturated, monoolefinic carboxylic acids,
c3) from 0 to 4.0 parts by weight of one or more α,β-unsaturated, monoolefinic carboxamides,
c4) from 0 to 8 parts by weight of one or more comonomers from the group consisting of hydroxyalkyl (meth)acrylates made from esters of acrylic acid or methacrylic acid and diols having 2 to 10 carbon atoms, and
c5) from 0.1 to 4.0 parts by weight of one or more α,β-unsaturated, monoolefinic compounds containing sulfonyl or sulfonate groups.

2. The use as claimed in claim 1, wherein the comonomer phase contains
a) from 50 to 80 parts by weight of one or more comonomere from the group consisting of ethylhexyl acrylate and n-butyl acrylate,
b) from 10 to 25 parts by weight of methyl methacrylate,
c1) from 0.5 to 10 parts by weight of styrene,
c2) from 0.1 to 4.0 parts by weight of one or more comonomers from the group consisting of acrylic acid, methacrylic acid and crotonic acid,
c3) from 0.1 to 4.0 parts by weight of one or more comonomers from the group consisting of acrylamide and methacrylamide,
c4) from 0.5 to 8 parts by weight of one or more comonomers of the group consisting of hydroxyethyl acrylate and hydroxypropyl methacrylate, and
c5) from 0.1 to 4.0 parts by weight of one or more comonomers from the group consisting of acrylamidopropanesulfonic acid, vinylsulfonic acid, styrenesulfonic acid and the salts thereof.

3. The use as claimed in claim 1 or 2, wherein the solids content of the aqueous polymer dispersion is from 30 to 55 % by weight, where the polymer has a glass transition temperature of from -25 to -15°C, and a K value of from 70 to 100 and a mean particle size of 150 nm and a Brookfield viscosity (20 rpm) of 1000 mPas are not exceeded.

4. The use as claimed in claims 1 to 3, wherein the aqueous polymer dispersion in the lamination of glossy films is applied to plastic films over the entire area, preferably in a thickness of from 5 to 50 »m, is subsequently dried and, for the production of laminates, the dried polymer film is covered with the paper or cardboard packaging sheet to be laminated and heat-sealed at a suitable temperature and under pressure.

## Revendications

1. Utilisation de dispersions aqueuses de polymères, à basse de copolymérisats esters de l'acide acrylique-esters de l'acide méthacrylique en tant qu'agents de couchage à pellicule brillante, les dispersions aqueuses de polymère ayant une teneur en solides comprise entre 20 et 65 % en poids, le copolymérisat une température de transition vitreuse comprise entre -35 et -10°C, une valeur K comprise entre 40 et 100 et une dimension moyenne de particules inférieure à 200 nm et le copolymérisat pouvant être préparé par polymérisation radicalaire en émulsion de
a) 50 à 80 parties en poids d'un ou de plusieurs comonomères du groupe des esters alkyliques de l'acide acrylique et d'alcools ayant de 2 à 10 atomes de carbone,
b) 10 à 25 parties en poids d'un ou de plusieurs comonomères du groupe des esters alkyliques de l'acide méthacrylique et d'alcools ayant de 1 à 10 atomes de carbone ainsi que
c1) de 0 à 10 parties en poids d'un ou de plusieurs comonomères vinyl-aromatiques,
c2) de 0,1 à 4,0 parties en poids d'un ou de plusieurs acides carboxyliques monooléfiniques, α,β-insaturés,
c3) de 0 à 4,0 parties en poids d'un ou de plusieurs amides d'acides carboxyliques monooléfiniques, α,β-insaturés,
c4) de 0 à 8 parties en poids d'un ou de plusieurs comonomères du groupe des hydroxyalkyl(meth)acrylates d'esters de l'acide acrylique ou de l'acide méthacrylique et de diols ayant de 2 à 10 atomes de carbone,
c5) de 0,1 à 4,0 parties en poids d'un ou de plusieurs composés monooléfiniques, α,β-insaturés, contenant des groupes acides sulfoniques ou sulfonates.

2. Utilisation selon la revendication 1, caractérisée en ce que la phase des comonomères contient
a) de 50 à 80 parties en poids d'un ou de plusieurs comonomères du groupe des acrylates d'éthylhexyle et de n-butyle,
b) de 10 à 25 parties en poids de méthacrylate de méthyle,
c1) de 0,5 à 10 parties en poids de styrène,
c2) de 0,1 à 4,0 parties en poids d'un ou de plusieurs comonomères du groupe des acides acrylique, méthacrylique, crotonique,
c3) de 0,1 à 4,0 parties en poids d'un ou de plusieurs comonomères du groupe de l'acrylamide et du méthacrylamide,
c4) de 0,5 à 8 parties en poids d'un ou de plusieurs comonomères d'un groupe contenant l'acrylate d'hydroxyéthyle, le méthacrylate d'hydroxypropryle,
c5) de 0,1 à 4,0 parties en poids d'un ou de plusieurs comonomère(s) du groupe comprenant l'acide acrylamidopropane-sulfonique, le vinyl-sulfonate, l'acide styrène-sulfonique et leurs sels.

3. Utilisation selon les revendications 1 à 2, caractérisée en ce que la teneur en solide des dispersions aqueuses de polymère est comprise entre 30 et 55 % en poids, le polymérisat ayant une température de transition vitreuse comprise entre -25 et -15°C, une valeur K comprise entre 70 et 100 et une granulométrie moyenne de 150 nm ainsi qu'une viscosité Brookfield (20 tr/min) n'excédant pas 1000 mPa.s.

4. Utilisation selon les revendications 1 à 3, caractérisée en ce qu'on dépose des dispersions aqueuses de polymère, lors du couchage à pellicule brillante, sur une feuille en plastique de grande surface avec une épaisseur d'application comprise de préférence entre 5 et 50 »m, ensuite on les sèche et, en vue de la préparation du composite, le film de polymère séché est recouvert avec la feuille de papier ou de cartonnage à recouvrir et est scellé à une température appropriée et sous pression.
